# EUROPEAN PATENT APPLICATION

(11) **EP 4 002 338 A1**
(43) Date of publication of application: **25.05.2022**
(21) Application number: 20383010.4
(22) Date of filing: 19.11.2020
(51) Int. Cl.: G09G 3/3208, G09G 3/00

(54) **DETECTING IMAGE FREEZING IN A VIDEO DISPLAYER**

(71) Applicant: Ficosa Adas, S.L.U., 08028 Barcelona (ES)
(72) Inventor: PACHECO, Alfonso, 08232 VILADECAVALLS (ES)
(74) Representative: ZBM Patents - Zea, Barlocci & Markvardsen

(57) **Abstract**

Video displayers are provided for detecting image freezing in a video displayer with a multi-layer panel including a front layer and a pixel layer emitting pixel light in emitting direction towards the front layer. Front layer and pixel layer are configured to let light through. Video displayers further include a light reflector arranged in the multi-layer panel between pixel layer and front layer to reflect the pixel light from pixel layer in reflexion direction towards pixel layer; a light sensor arranged to receive the reflected pixel light at receiving location and sense light variations in received reflected pixel light; and a control unit to receive light variations sensed by light sensor and to detect image freezing depending on received sensed light variations. Methods and computer programs implementing such methods are also provided which are performable by proposed video displayers.

## Description

The present disclosure relates to video displayers with image freezing detection, to methods suitable for being performed in/by such video displayers, and to computer programs suitable for performing such methods.

### BACKGROUND

It may be critical to verify whether images shown by a video displayer are being displayed correctly or, otherwise, incorrectly. In particular, it may highly advantageous to detect whether images that are being displayed at corresponding screen are moving according to e.g. real scenarios captured by a camera or, on the contrary, become frozen. Nowadays, it is unacceptable e.g. in automotive industry to have frozen images in a video displayer showing images from e.g. a rear-view video camera or similar.

An object of the disclosure is to provide new video displayers, methods and computer programs aimed at solving the aforementioned problem.

### SUMMARY

In an aspect, a video displayer with image freezing detection is provided comprising a multi-layer display panel including a plurality of layers with at least a front layer and a pixel generator layer. The front layer and the pixel generator layer are configured to at least partially let light through, and the pixel generator layer is configured to emit pixel light in an emitting direction towards the front layer.

The video displayer further comprises a light reflector, a light sensor, and a control unit or module. The light reflector is arranged in the plurality of layers in such a way that, in use, the light reflector reflects pixel light from the pixel generator layer in a reflexion direction towards the pixel generator layer. The light sensor is arranged in such a way that, in use, the light sensor receives the reflected pixel light at a receiving location and senses light variations in the received reflected pixel light. The control unit is configured to receive the light variations sensed by the light sensor and to detect image freezing depending on the received sensed light variations.

The proposed video displayer may detect whether image freezing has occurred or is occurring during displaying of video images. If no variation of light from one image to another is detected, it may be concluded that image freezing has occurred or is occurring. Any number of consecutive images may be considered to discern whether image displaying become frozen or not. If no light variation is detected within said sequence of consecutive images, it may be determined that image freezing has occurred or is occurring. Alternatively, light variations may refer to light divergences between image to be displayed and light produced by what is really displayed. If light divergences are detected, it may be concluded that image freezing has occurred or is occurring, or the contrary situation otherwise.

Thresholds may be used to achieve such a conclusion. In some examples, if some light variation between consecutive displayed images is detected below corresponding variation threshold, it may be determined that image freezing has occurred or is occurring. Otherwise, if variation threshold is exceeded, it may be determined that image freezing has not occurred or is not occurring. In other examples, if some light divergence between image to be displayed and what is really displayed is detected below corresponding divergence threshold, it may be determined that image freezing has not occurred or is not occurring. Otherwise, if divergence threshold is exceeded, it may be determined that image freezing has occurred or is occurring.

Light variations and/or divergences may refer to variations/divergences of any light parameter that permits distinguishing one image from another and/or differences between image to be displayed and what is really displayed. For example, said light parameter may correspond to at least one of light frequency, light amplitude, light intensity, etc.

In some examples, the control unit or module may be configured to generate at a "pattern" region of the pixel generator layer a dynamic pattern of pixel light according to predefined light variations in the emitting direction, and to detect image freezing depending on whether the sensed light variations correspond to the predefined light variations. The detector system may further comprise a pattern generator arranged at or integrated within the "pattern" region of the pixel generator layer, and the control unit may be accordingly configured to control the pattern generator to generate the dynamic pattern of pixel light.

The proposed video displayer with dynamic pattern generation may permit effectively and accurately detecting image freezing even if images being displayed correspond to a monotonous scenario, i.e. without clearly detectable changes in light. In a vehicle rear-view system, for example, images captured and displayed on video displayer may correspond to uniform landscape or environment while e.g. vehicle is circulating on a highway or stopped. The proposed solution permits generate dynamic pattern(s) with clearly discernible light variations for ensuring accurate detection of discrepancies between predefined and sensed light variations. For example, predefined light variations may be defined with a minimum variability such that differences between predefined and sensed light variations are clearly detectable. The proposed video displayer may thus permit a very effective and accurate detection of image freezing based on such detectable differences. When, for example, differences are above a predefined difference threshold, it may be determined that image freezing has occurred or is occurring. Otherwise, occurrence of image freezing may be discarded.

In some configurations, the light reflector may be arranged at the front layer or at an intermediate layer between the pixel generator layer and the front layer.

Video displayers according to present disclosure are based on a multi-layer display panel letting light through and having pixel generator layer configured to emit pixel light towards front layer (in emitting direction). Examples of such displayers may be those based on LED (light emitting diode) technology, such as e.g. OLED displays.

The plurality of layers may further comprise, in some implementations, a back layer, and the pixel generator layer may be arranged between the front layer and the back layer. Such a back layer may be configured to at least partially let light through or may be opaque. In the second case, the back layer may be the only opaque layer in the multi-layer display panel and may be made of metal such as e.g. copper.

The opaque back layer may include an opening to let light through it between the light reflector and the light sensor. In other words, the light sensor may be arranged in such a way that, in use, the light sensor receives the reflected pixel light at the receiving location through the opening in the back layer. In any case, with or without said opening in the back layer, the light reflector and the light sensor may thus be in optical communication.

In examples according to a "direct reception" approach, the back layer may include an outside side of the multi-layer display panel, and the light sensor may be arranged in such a way that, in use, a sensing side of the light sensor receives light from the light reflector at the receiving location. Such a sensing side may be facing the outside side of the back layer. Sensing side may be defined as a side of the light sensor at which light is received and accordingly sensed.

In implementations according to "direct reception" approach, the light sensor may be arranged attached to the outside side of the back layer or attached to a Printed Circuit Board (PCB) of the video displayer facing the outside side of the back layer.

Alternatively to "direct reception" approach, the light sensor may include a sensor unit and a light guide. The sensor unit may be arranged remotely with respect to the multi-layer display panel, and the light guide may be arranged to cause transmission of the reflected pixel light from the receiving location to the sensor unit. These implementations may be referred to as an "indirect reception" approach in the sense that the reflected pixel light is received by sensor unit indirectly through the light guide.

In examples according to "indirect reception" approach, the light guide may be made of optical fibre or methacrylate, and/or the sensor unit may be arranged on a PCB of a Camera Monitoring System (CMS) which is arranged in a remote position with respect to the multi-layer display panel.

In some configurations, the light sensor may be arranged to receive the reflected pixel light at the receiving location through the aforementioned opening in the back layer so that passage of light is permitted and/or enhanced. Alternatively, "indirect reception" approach may be implementable without the need of such an opening in the back layer.

According to examples, the light reflector may be arranged at a margin or near-margin location of the multi-layer display panel, said margin or near-margin location being covered or coverable by a bezel of the video displayer.

In some implementations, the control unit (or control module) may be configured to detect image freezing further depending on an ambient light sensed by an ambient light sensor (ALS). Such an ambient light sensor may be comprised in the detector system and/or in the video displayer.

In a further aspect, a method is provided for any one of the proposed video displayers to detect image freezing. This "detector" method comprises receiving, by the control unit, light variations sensed by the light sensor in reflected pixel light received at receiving location from the light reflector which has originated the reflected pixel light by reflecting pixel light from the pixel generator layer in a reflexion direction towards the pixel generator layer. The "detector" method further comprises detecting, by the control unit, image freezing depending on the received sensed light variations.

In a still further aspect, a computer program is provided comprising program instructions for causing a computing system to perform methods of detecting image freezing, such as the ones proposed herein. The computer program may be embodied on a storage medium and/or carried on a carrier signal.

In a yet further aspect, a computing system is provided for detecting image freezing in a video displayer, the computing system comprising a memory and a processor, embodying instructions stored in the memory and executable by the processor, and the instructions comprising functionality or functionalities to execute methods of detecting image freezing such as the ones proposed herein.

According to examples, vehicle rear-view systems may be provided including a rear-view camera, any of the video displayers disclosed herein, and a connection between the video displayer and the rear-view camera in such a way that, in use, the video displayer receives video signal from the rear-view camera through the connection and displays said received video signal with image freezing detection.

In further examples, a vehicle may be provided including any of the aforementioned vehicle rear-view systems.

### BRIEF DESCRIPTION OF THE DRAWINGS

Non-limiting examples of the disclosure will be described in the following, with reference to the appended drawings, in which:
Figure 1a schematically illustrates a portion of a video displayer with image freezing detection, according to examples.
Figure 1b schematically illustrates a portion of a video displayer with image freezing detection, according to further examples.
Figure 1c schematically illustrates a portion of a video displayer with image freezing detection, according to other examples.
Figure 1d schematically illustrates a portion of a video displayer with image freezing detection, according to still further examples.
Figure 1e schematically illustrates a portion of a video displayer with image freezing detection, according to yet further examples.
Figure 2 is a flow chart schematically illustrating detector methods according to examples, which are suitable for being performed at/by video displayers equal or similar to the ones shown in Figures 1a - 1e.
Figures 3a, 3b schematically illustrate a rear-view video displayer including a bezel, and with equal or similar configurations to the ones shown in Figures 1a - 1e.
Figure 3c shows a cross-sectional view of a video displayer in line with Figure 3a according to cutting plane 300a.

### DETAILED DESCRIPTION OF EXAMPLES

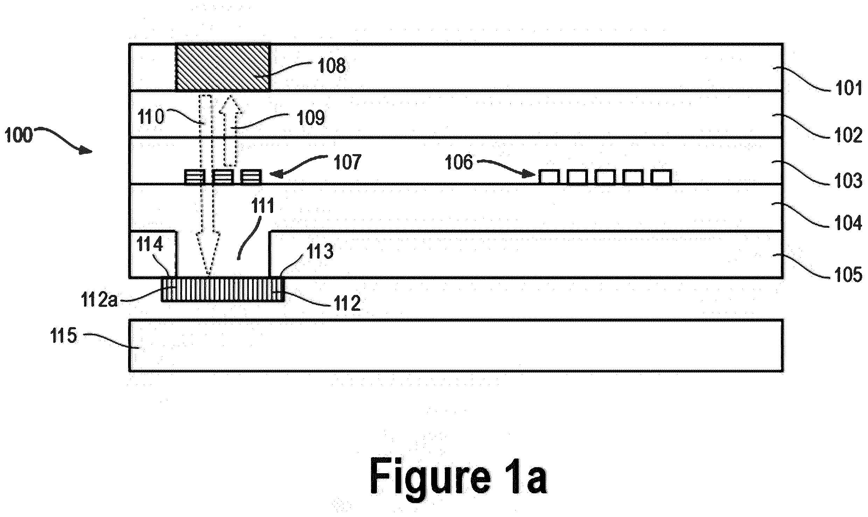

Figure 1a schematically illustrates a portion of a video displayer with image freezing detection, according to examples. As illustrated, video displayers according to present disclosure may satisfy following requirements. Such video displayers may include a multi-layer display panel 100 having a plurality of layers 101 - 105. The plurality of layers may comprise at least a front layer 101 and a pixel generator layer 103. Each layer 101 - 105 in the plurality of layers 100 may be configured to at least partially let light through, and the pixel generator layer 103 may be configured to emit pixel light 106 in emitting direction 109 towards the front layer 101. Emitting direction 109 may thus correspond to a direction towards user viewing position(s) when video displayer is used by corresponding user, such as e.g. a driver if video displayer is a vehicle video displayer.

The plurality of layers 100 may correspond to a laminated structure with straight/flat layers 101 - 105 as well as parallel and joined with each other.

The front layer 101 may be or comprise a cover glass. The plurality of layers 100 may further comprise a back layer 105 that may be or comprise a protection film and/or cushion layer. The back layer 105 may be opaque or not. If opaque, the back layer 105 may be the only opaque layer in the multi-layer display panel 100. If opaque, the back layer 105 may be made of metal such as e.g. copper. The pixel generator 103 layer may be or comprise an encapsulation layer 103 configured to generate pixels 106. The display panel 100 may further comprise e.g. a polarizer layer 102 and a Low-temperature polycrystalline silicon (LTPS) layer 104. The polarizer layer 102 may be stuck between the front layer 101 and the pixel generator layer 103. The LTPS layer 104 may be stuck between the back layer 105 and the pixel generator layer 103.

As also shown in Figure 1a, video displayers according to present disclosure may include a light reflector module 108, a light sensor module 112, and a control unit or control module. The control module may be or comprise a software and/or hardware module, which may be includable or included in/on e.g. a Printed Circuit Board (PCB) 115 of the video displayer.

In examples, detectors systems may further comprise a pattern generator 107 arranged at or integrated within the pixel generator layer 103 in such a way that, in use, the pattern generator 107 emits in emitting direction 109 a dynamic pattern of pixel light according to predefined light variations (e.g. light intensity, amplitude, frequency variations). Alternatively, such a pattern generator 107 may not exist and the control unit may cause generation of dynamic pattern(s) through pre-existing pixels 106 at suitable region 107 of the pixel generator layer 103. Further alternatively, dynamic patterns may not be generated, and image freezing may be detected based on light variations between consecutive images displayed by the video display, and/or based on detecting difference(s) between image to be displayed and what is really displayed.

The light reflector 108 may be arranged in the plurality of layers 100 in such a way that, in use, the light reflector 108 reflects the pixel light in a reflexion direction 110 towards the pixel generator layer 103. The light reflector 108 may be arranged at front layer 101 and/or intermediate layer 102, e.g. at least partially at the front layer 101 and at least partially at the intermediate layer 102, etc.

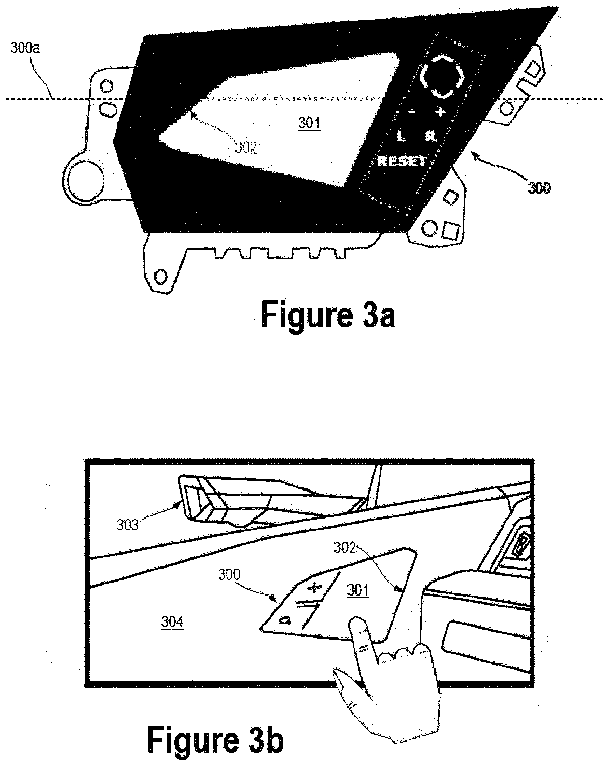

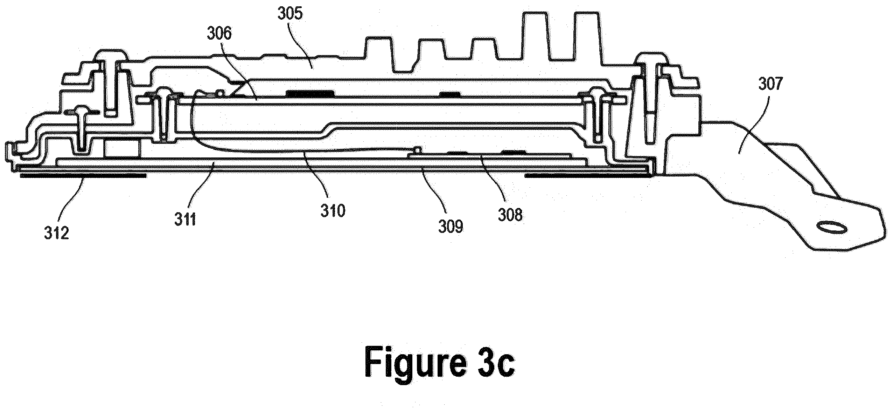

As also shown in Figure 1a, the light reflector 108 may be arranged at a margin or near-margin location of corresponding layer(s) 101, 102, said (near-) margin location being coverable or covered by a bezel 302 (see Figures 3a, 3b) of the video displayer. Figures 3a, 3b show an example of rear-view displayer 300 for displaying images from rear-view camera 303, including a bezel 302 covering (near-) margin location of the front layer 301 (101 in Figure 1a). This way, the light reflector 108 is not visible, since it is hidden by the bezel 302. Figure 3b shows the video displayer 300 installed in a door 304 of a vehicle, along with rear-view camera 303 configured to capture rear view video images and to send them to video displayer 300. Figure 3a further shows a cutting plane 300a to obtain the cross-sectional view of Figure 3c.

The light sensor 112 may be arranged in such a way that, in use, the light sensor 112 receives the reflected pixel light 110 at a receiving location 112a and senses light variations in the reflected pixel light 110. In particular, the light sensor 112 may be arranged in the video displayer in such a way that, in use, a sensing side of the light sensor 112 receives reflected light at the receiving location 112a. The sensing side of the light sensor may be disposed facing an outside side 113, 114 of the back layer 105. More particularly, the light sensor 112 may be arranged attached to the back layer 105 on outside surface or surfaces 113, 114 of the back layer 105. Alternatively, the light sensor 112 may be arranged at an intermediate layer between pixel generator layer 103 and back layer 105, such as e.g. in layer 104.

As further shown in Figure 1a, the light sensor 112 may be arranged to receive the reflected pixel light 110 at the receiving location 112a through an opening 111 in the back layer 105. This opening 111 may permit and/or enhance passage of the reflected pixel light 110 and, therefore, improve the performance and/or accuracy of the video displayer. In general terms, the light sensor 112 may be in optical communication with the light reflector 108.

The light sensor 112 may be any device configured to receive photons of electromagnetic waves (i.e. light) and to convert them into electrical signal(s) with a number of electrons proportional to the amount of received light. The electrical signal(s) may then be received and used by the control module to determine whether correspondence or equivalence exists between predefined and sensed light variations in dynamic pattern, between image(s) to be displayed and what is really displayed, between consecutive displayed images, etc.

The control module may be configured to detect image freezing depending on sensed light variations between different consecutive displayed images. In implementations based on dynamic pattern generation, the control module may be configured to control a "pattern" region 107 of the pixel generator layer 103 or a pattern generator 107 within the pixel generator layer 103. To this end, the control unit may produce control signals to cause generation of dynamic pattern(s) according to predefined light variations. The control module may thus be configured to detect image freezing depending on whether sensed light variations correspond to predefined light variations.

In approaches based on comparing image(s) to be displayed and what is really displayed, the control unit may be comprised in or connected with Electronic Control Unit (ECU) receiving images to be displayed (from e.g. camera) and processing them for their displaying. This way, the control unit may have access to the images to be displayed through corresponding link with the ECU.

The control module may be implemented as software (computer program) or hardware or a combination of both. The control module may be installable or installed in/on/at a PCB of the video displayer, or in/on/at a PCB of corresponding (rear-view) camera monitoring system (CMS), or in/on/at the light sensor 112 itself, or may be a standalone module installable anywhere in the video displayer.

In video displayers according to present disclosure, the control unit may be configured to detect image freezing further depending on an ambient light sensed by an ambient light sensor (ALS). Such an ambient light sensor may be comprised in the video displayer or not. The ambient light sensor may be arranged underneath the display panel 100 to sense ambient light conditions which may denote e.g. certain degradation of the light emitted by the video displayer. Light degradation may be due to e.g. aging of light or LED units producing pixel light to display corresponding (video) images. The control module may detect any change in light produced by the video displayer depending on corresponding signals from the ambient light sensor, and accordingly determine a modulation of the pixel light sensed by the light sensor. In other words, the control module may modulate pixel light sensed by the light sensor depending on light changes sensed by the ambient light sensor, thereby improving performance of the detector system in case of e.g. light degradation.

As used herein, the term "module" may be understood to refer to software, firmware, hardware and/or various combinations thereof. It is noted that the modules are exemplary. The modules may be combined, integrated, separated, and/or duplicated to support various applications. Also, a function described herein as being performed by a particular module may be performed by one or more other modules and/or by one or more other devices instead of or in addition to the function performed by the described particular module.

Modules, such as e.g. the control unit or module in video displayers according to present disclosure, may be implemented across multiple devices, associated or linked to methods of detecting image freezing proposed herein, and/or to other components that may be local or remote to one another. Additionally, the modules may be moved from one device and added to another device, and/or may be included in both devices, associated to methods of detecting image freezing proposed herein. Any software implementations may be tangibly embodied in one or more storage media, such as e.g. a memory device, a floppy disk, a compact disk (CD), a digital versatile disk (DVD), or other devices that may store computer code.

Control units or modules for detecting image freezing according to present disclosure may be implemented by computing means, electronic means or a combination thereof. The computing means may be a set of instructions (e.g. a computer program) and then the control units for detecting image freezing may comprise a memory and a processor, embodying said set of instructions stored in the memory and executable by the processor. These instructions may comprise functionality or functionalities to execute methods of detecting image freezing such as e.g. the ones described with reference to other figures.

In case the control units for detecting image freezing are implemented only by electronic means, a controller of the system may be, for example, a CPLD (Complex Programmable Logic Device), an FPGA (Field Programmable Gate Array) or an ASIC (Application-Specific Integrated Circuit).

In case the control units for detecting image freezing are a combination of electronic and computing means, the computing means may be a set of instructions (e.g. a computer program) and the electronic means may be any electronic circuit capable of implementing corresponding methods of detecting image freezing proposed herein.

The computer program(s) may be embodied on a storage medium (for example, a CD-ROM, a DVD, a USB drive, a computer memory or a read-only memory) or carried on a carrier signal (for example, on an electrical or optical carrier signal).

The computer program(s) may be in the form of source code, object code, a code intermediate source and object code such as in partially compiled form, or in any other form suitable for use in implementing the methods of detecting image freezing according to present disclosure. The carrier may be any entity or device capable of carrying the computer program(s).

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When the computer program(s) is/are embodied in a signal that may be conveyed directly by a cable or other device or means, the carrier may be constituted by such cable or other device or means. Alternatively, the carrier may be an integrated circuit in which the computer program(s) is/are embedded, the integrated circuit being adapted for performing, or for use in the performance of, the methods of detecting image freezing proposed herein.

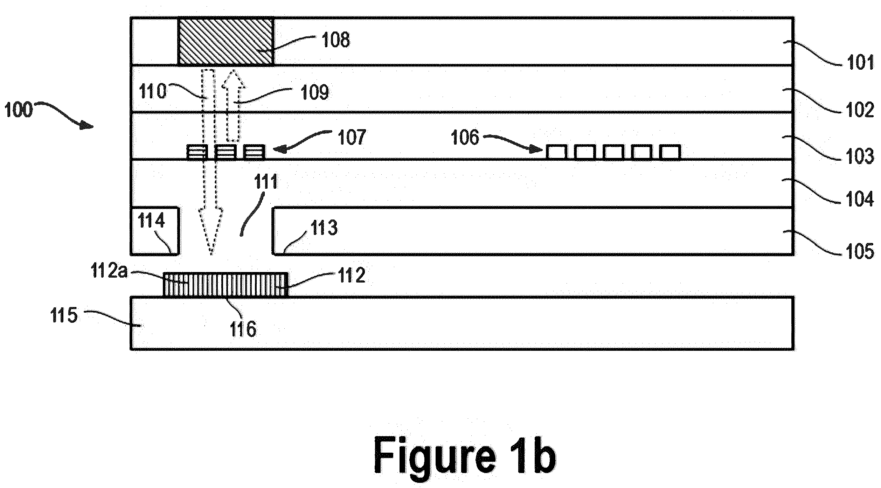

Figure 1b schematically illustrates a portion of a video displayer with image freezing detection, according to further examples. Video displayers according to Figure 1b are similar to the ones according to Figure 1a. Number references from Figure 1a may therefore be re-used in Figure 1b to indicate equal or similar components. Most considerations made regarding Figure 1a may be equally or similarly applicable to configurations according to Figure 1b. One difference between Figures 1a and 1b is that in video displayers according to Figure 1b, the light sensor 112 may be arranged attached to a PCB 115 of the video displayer on corresponding side or surface 116 of the PCB 115.

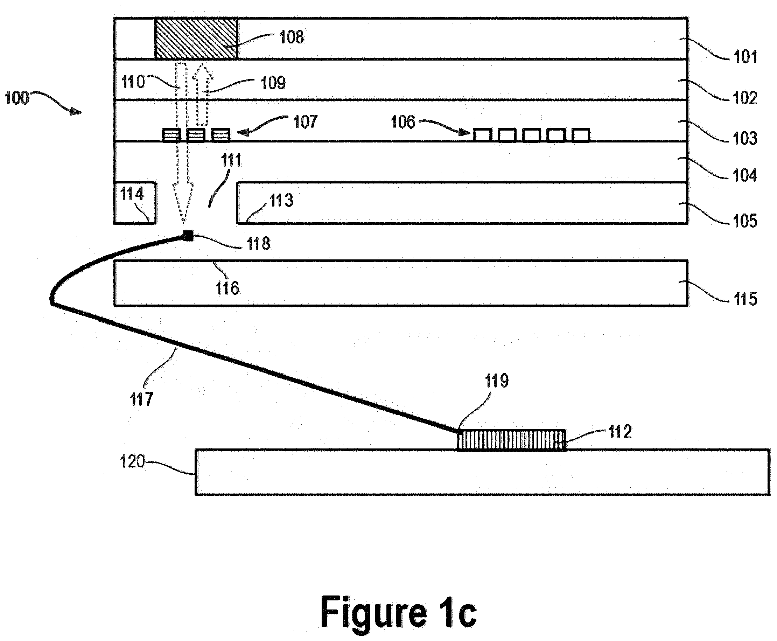

Figure 1c schematically illustrates a portion of a video displayer with image freezing detection, according to other examples. Video displayers according to Figure 1c are similar to the ones according to Figure 1a. Number references from Figure 1a may therefore be re-used in Figure 1c to indicate equal or similar components. Most considerations set forth with respect to Figure 1a may be equally or similarly applicable to configurations according to Figure 1c.

One difference between Figures 1a and 1c is that in video displayers according to Figure 1c, the light sensor may include a sensor unit 112 arranged remotely with respect to the multi-layer display panel 100. This remote location may simply mean a location at which the sensor unit 112 cannot directly receive the reflected pixel light 110 from the light reflector 108. In this case, detector systems may further comprise a light guide 117 optically connecting receiving location 118 and sensor unit 112. In particular, light guide 117 may comprise first end and second end, with first end disposed at receiving location 118 and second end disposed at sensor unit 112, so as to provoke transmission of the reflected pixel light 110 from receiving location 118 to sensor unit 112.

The light guide 117 may be made of optical fibre or methacrylate or any material capable of effectively transmitting light. The light guide 117 may have any elongated shape, such as e.g. a tube shape. The remote location at which the sensor unit 112 may be installable or installed may correspond to e.g. a PCB of corresponding Camera Monitoring System (CMS).

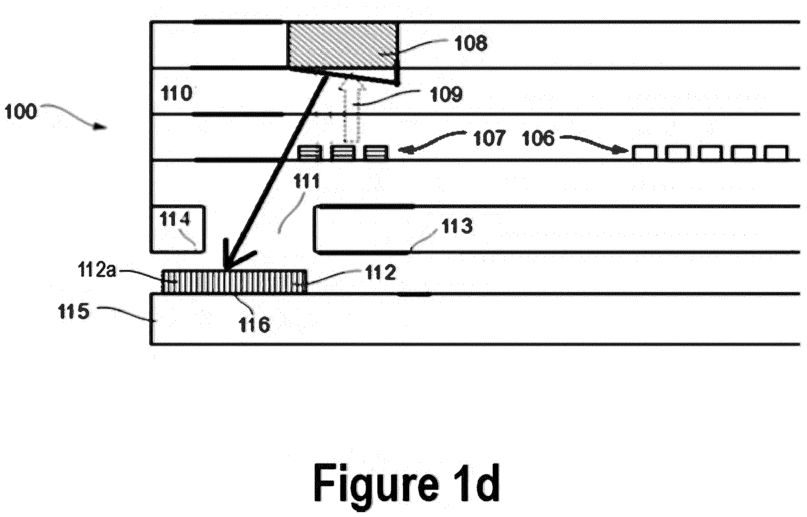

Figure 1d schematically illustrates a portion of a video displayer with image freezing detection, according to still further examples. Video displayers according to Figure 1d are similar to the ones according to Figure 1a. Number references from Figure 1a may therefore be re-used in Figure 1d to indicate equal or similar components. Most considerations made regarding Figure 1a may be equally or similarly applicable to configurations according to Figure 1d. One difference between Figures 1a and 1d is that in video displayers according to Figure 1d, the light reflector 108 and the light sensor 112 are not aligned to cause reflection direction substantially perpendicular to layers 100. In this case, the light reflector 108 may include a pitched reflection surface so that pixel light is reflected towards light sensor 112 in "inclined" manner.

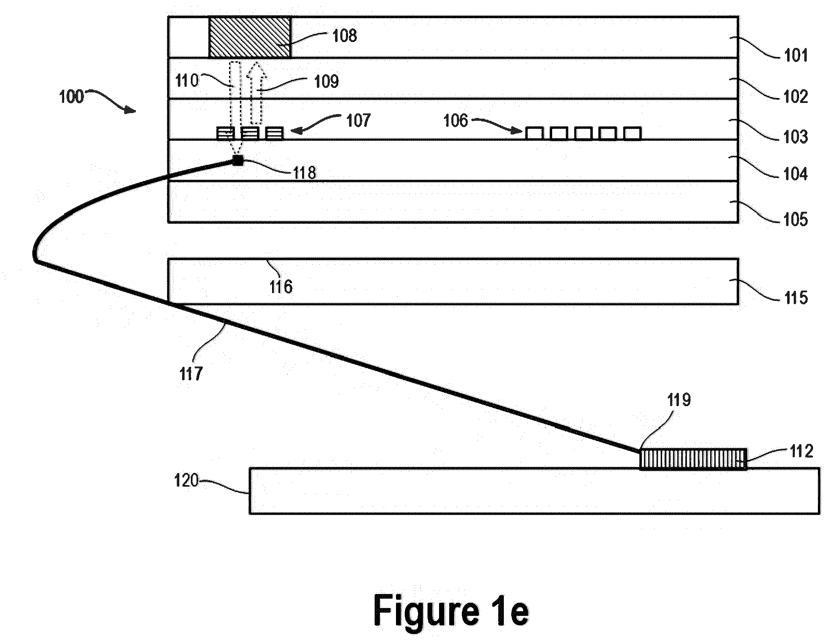

Figure 1e schematically illustrates a portion of a video displayer with image freezing detection, according to yet further examples. Video displayers according to Figure 1e are similar to the ones according to Figure 1c. Number references from Figure 1c may therefore be re-used in Figure 1e to indicate equal or similar components. Most considerations made regarding Figure 1c may be equally or similarly applicable to configurations according to Figure 1e. One difference between Figures 1c and 1e is that in video displayers according to Figure 1e, the light guide 117 is arranged with first end at receiving location 118 so that interference by the back layer 105 on reflected light pixel towards receiving location 118 is avoided. In the particular case illustrated, receiving location 118 is in layer 104. None opening in back layer 105 is thus required to permit and/or improve pass of light in this scenario. Only a (small) hole may be required for the light guide 117 to be passed through it. This hole may be in any of the layers in the multi-layer display panel 100 whenever receiving location 118 is reached by corresponding end of the light guide 117. In the particular example shown, light guide 117 is inserted in display panel 100 through layer 104.

Figure 3c shows a cross-sectional view of video displayers in line with Figure 3a according to cutting plane 300a. This cross-sectional view is presented for reasons of clarity in regard to general context of video displayer in which configurations according to e.g. Figures 1a - 1e may be implemented. Such video displayers may comprise back housing 305, PCB CMS 306, base plate 307, PCB display 308, display panel 309, data connection cable 310, back layer 311 (made of e.g. copper) and bezel 312. PCB CMS 306 may correspond to a Printed Circuit Board (PCB) of a Camera Monitoring System (CMS) that may be dedicated to process (video) images from lateral camera 303, and in which a CROP may be included. Display panel 309 may have same or similar structure as the ones of Figures 1a - 1e, and PCB display 308 may be arranged as explained with reference to same Figures. Therefore, configurations according to Figures 1a - 1e, with corresponding light reflector 108, light sensor 112, etc. may be included or implemented or integrated within video displayers according to Figure 3c.

In the examples described, two different approaches may be distinguished, direct reception approach and indirect reception approach. Configurations according to Figures 1a, 1b and 1d correspond to direct reception approach, and configurations according to Figures 1c and 1e correspond to indirect reception approach.

A general feature of video displayers according to present disclosure may be that the pixel generator layer 103 is arranged between the light reflector 108 and the receiving location 112a, 118. Another general feature may be that the light reflector 108 and the receiving location 112a, 118 are arranged to be in optical communication with each other. A further general characteristic may be that the receiving position 112a, 118 is located at any layer of the display panel 100 below or behind the pixel generator layer 103.

Either sensor unit 112 or corresponding end of light guide 117 may be arranged at receiving position 112a, 118. In any case, light sensor/unit 112 may be below or behind pixel generator layer 103 and, accordingly, below or behind front layer 101. This means that it is not required that bezel 302 protects the light sensor/unit 112 because it is arranged internally to the displayer and, therefore, the size of the bezel 302 may be minimized. This is a clear advantage with respect to prior art video displayers.

In video displayers according to present disclosure, the emitting direction 109 and the reflexion direction 110 may be perpendicular to layers in the display panel 100. This feature is shown in Figures 1a, 1b, 1c and 1e. In other examples, the emitting direction 109 may be perpendicular to layers in the display panel 100, and the reflexion direction 110 may be inclined with respect to layers 100. This feature is shown in Figure 1d.

Video displayers according to present disclosure may have a frame rate between 30 and 120 fps, more particularly between 30 and 60 fps, and still more particularly of 60 fps.

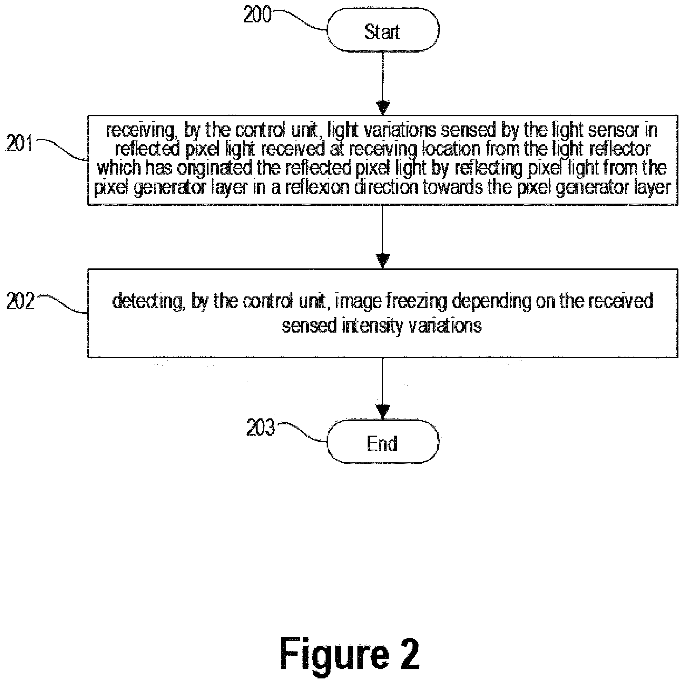

Figure 2 is a flow chart schematically illustrating detector methods according to examples, which are suitable for being performed at/by video displayers equal or similar to the ones shown in Figures 1a - 1e. Since detector methods according to Figure 2 are performable by video displayers according to Figures 1a - 1e, number references from Figures 1a - 1e may be re-used in following description of Figure 2. Detector methods may be initiated (e.g. at block 200) upon detection of a starting condition such as e.g. a user request for starting the method, when vehicle including video displayer is turned on, etc.

Detector methods may further include (e.g. at block 201) receiving, by the control unit, light variations sensed by the light sensor 112. As commented before with respect to Figures 1a - 1e, emission of pixel light 109 from pixel generator layer 103 may cause the light reflector 108 to reflect the pixel light in reflexion direction 110 towards the pixel generator layer 103. And such a reflection by the light reflector 108 may then cause the light sensor 112 to receive the reflected pixel light at a receiving location 1122, 118 and to sense light variations in the reflected pixel light.

Detector methods may further include (e.g. at block 202) detecting image freezing depending on the sensed light variations. Sensor signals representing sensed light values and/or variations from the light sensor 112 may be received by the control unit, so as to evaluate them and determine whether image freezing has occurred or is occurring depending on the sensed light variations. As commented before, light variations may correspond to differences between image(s) to be displayed and what is really displayed, differences between consecutive displayed images, differences between sensed and predefined light variations, etc.

The above comparisons aimed at determining image freezing may consider a certain tolerance or acceptability range. If sensed light variations (or divergences, differences, etc.) are within tolerance or acceptability range, it may be determined that image freezing has occurred or is occurring depending on whether said variations, divergences, differences, etc. are within or outside tolerance or acceptability range.

In approaches based on dynamic light pattern(s), for example, the more different or divergent the sensed and predefined intensity variations are, the more possibilities may exist that image freezing has occurred or is occurring. If divergences between sensed and predefined intensity variations are determined above a predefined divergence threshold, it may be determined that image freezing has occurred or is occurring. In this case, a warning may be outputted by the detector system on the display panel itself or at a side warning emitter, such as e.g. a LED-based, sound-based, vibration-based, etc, warning emitter.

The above functionalities implemented at blocks 201 and 202 may be performed by the control unit or module of any of the disclosed video displayers, such as the ones according to Figures 1a - 1e. Functional details and considerations about said control module with regard to Figures 1a - 1e may thus be similarly attributed to method blocks 201 and 202.

Blocks 201 and 202 may be continuously performed so as to check correct functioning of the video displayer, until detection of an ending condition. Detector methods may be terminated (e.g. at block 203) upon such a detection of the ending condition, which may be or comprise e.g. a user request for ending the method, when vehicle including video displayer is turned off, etc.

Vehicle rear-view systems may be further provided including a rear-view camera, any of the video displayers disclosed herein, and a connection between the video displayer and the rear-view camera. Said connection may enable the video displayer to receive video signal from the rear-view camera (through the connection) and accordingly display the received video signal. The rear-view camera may be arranged at a lateral side of the vehicle as illustrated in e.g. Figure 3b. Said rear-view camera may be further configured to capture an image encompassing at least a lateral side part of the vehicle. Additionally, the control unit may be further configured to generate an instruction for the video displayer to display at least a portion of the received video signal from the rear-view camera in which said portion encompasses at least a lateral side part of the vehicle.

Vehicles, such as e.g. cars, vans, trucks, etc. may be further provided including any of the vehicle rear-view systems disclosed herein.

Although only a number of examples have been disclosed herein, other alternatives, modifications, uses and/or equivalents thereof are possible. Furthermore, all possible combinations of the described examples are also covered. Thus, the scope of the disclosure should not be limited by particular examples, but it should be determined only by a fair reading of the claims that follow.

## Claims

1. A video displayer with image freezing detection comprising a multi-layer display panel including a plurality of layers with at least a front layer and a pixel generator layer, wherein
the front layer and the pixel generator layer are configured to at least partially let light through, and the pixel generator layer is configured to emit pixel light in an emitting direction towards the front layer;
the video displayer further comprising:
a light reflector arranged in the plurality of layers in such a way that, in use, the light reflector reflects pixel light from the pixel generator layer in a reflexion direction towards the pixel generator layer;
a light sensor arranged in such a way that, in use, the light sensor receives the reflected pixel light at a receiving location and senses light variations in the received reflected pixel light; and
a control unit configured to receive the light variations sensed by the light sensor and to detect image freezing depending on the received sensed light variations.

2. The video displayer according to claim 1, wherein the control unit is configured to generate at a region of the pixel generator layer a dynamic pattern of pixel light according to predefined light variations in the emitting direction; and wherein
the control unit is configured to detect image freezing depending on whether the sensed light variations correspond to the predefined light variations.

3. The video displayer according to claim 2, further comprising a pattern generator installable at the region of the pixel generator layer; and wherein
the control unit is configured to control the pattern generator to generate the dynamic pattern of pixel light.

4. The video displayer according to any of claims 1 to 3, wherein the light reflector is arranged at the front layer or at an intermediate layer between the pixel generator layer and the front layer.

5. The video displayer according to any of claims 1 to 4, wherein the plurality of layers further comprises a back layer with an opening, and the pixel generator layer is arranged between the front layer and the back layer; and wherein
the light sensor is arranged in such a way that, in use, the light sensor receives the reflected pixel light at the receiving location through the opening in the back layer.

6. The video displayer according to claim 5, wherein the back layer includes an outside side of the multi-layer display panel; and wherein
the light sensor is arranged in such a way that, in use, the light sensor is arranged at the receiving location with a sensing side facing the outside side of the back layer.

7. The video displayer according to claim 6, wherein the light sensor is attached to the outside side of the back layer or attached to a Printed Circuit Board, PCB, of the video displayer facing the outside side of the back layer.

8. The video displayer according to any of claims 1 to 7, wherein the light reflector is arranged in such a way that, in use, the reflexion direction followed by the reflected pixel light is perpendicular to the front layer and/or the pixel generator layer.

9. The video displayer according to any of claims 1 to 8, wherein the light sensor includes a sensor unit and a light guide, the sensor unit being arranged remotely with respect to the multi-layer display panel, and the light guide being arranged to cause transmission of the reflected pixel light from the receiving location to the sensor unit.

10. The video displayer according to claim 9, wherein the light guide is made of optical fibre or methacrylate.

11. The video displayer according to any of claims 9 or 10, wherein the sensor unit is arranged on a PCB of a Camera Monitoring System, CMS, arranged in a remote position with respect to the multi-layer display panel.

12. The video displayer according to any of claims 1 to 11, wherein the light reflector is arranged at a margin or near-margin location of the multi-layer display panel, said margin or near-margin location being covered or coverable by a bezel of the video displayer.

13. The video displayer according to any of claims 1 to 12, wherein the control unit is configured to detect image freezing further depending on an ambient light sensed by an ambient light sensor, ALS.

14. A method for a video displayer according to any of claims 1 to 13 to detect image freezing, the method comprising:
receiving, by the control unit, light variations sensed by the light sensor in reflected pixel light received at receiving location from the light reflector which has originated the reflected pixel light by reflecting pixel light from the pixel generator layer in a reflexion direction towards the pixel generator layer;
detecting, by the control unit, image freezing depending on the received sensed light variations.

15. A vehicle rear-view system including a rear-view camera, a video displayer according to any of claims 1 to 14, and a connection installed or installable between the video displayer and the rear-view camera in such a way that, in use, the video displayer receives video signal from the rear-view camera through the connection and displays said received video signal.
